# EUROPÄISCHE PATENTSCHRIFT

(11) **EP 1 740 367 B1**
(45) Veröffentlichungstag und Bekanntmachung des Hinweises auf die Patenterteilung: **04.11.2009**
(21) Anmeldenummer: 05729824.2
(22) Anmeldetag: 03.03.2005
(51) Int. Cl.: B29C 67/00, B22F 3/10

(54) **VERFAHREN ZUR HERSTELLUNG VON DREIDIMENSIONALEN OBJEKTEN MITTELS ELEKTROMAGNETISCHER STRAHLUNG UND AUFTRAGEN EINES ABSORBERS PER INKJET-VERFAHREN**
METHOD FOR PRODUCTION OF THREE-DIMENSIONAL OBJECTS BY MEANS OF ELECTROMAGNETIC RADIATION AND APPLICATION OF AN ABSORBER BY MEANS OF AN INK-JET METHOD
PROCEDE DE PRODUCTION D'OBJETS TRIDIMENSIONNELS AU MOYEN D'UN RAYONNEMENT ELECTROMAGNETIQUE ET D'UNE APPLICATION D'UN ABSORBANT PAR UN PROCEDE A JET D'ENCRE

(30) Priorität: 27.04.2004 DE 102004020452
(43) Veröffentlichungstag der Anmeldung: 10.01.2007
(73) Patentinhaber: Evonik Degussa GmbH, 45128 Essen (DE)
(72) Erfinder: BAUMANN, Franz-Erich, 48249 Dülmen (DE); GREBE, Maik, 44805 Bochum (DE); MONSHEIMER, Sylvia, 45721 Haltern am See (DE)
(86) Internationale Anmeldenummer: PCT/EP2005/050949
(87) Internationale Veröffentlichungsnummer: WO 2005/105412

(56) Entgegenhaltungen:
- EP-A- 1 411 087
- WO-A-01/38061
- WO-A-2005/011959
- DE-A1- 19 918 981
- US-A1- 2002 105 114

## Beschreibung

Die Erfindung betrifft ein Verfahren zur Herstellung von dreidimensionalen Objekten gemäß dem Anspruch 1.

Die zügige Bereitstellung von Prototypen ist eine in der jüngsten Zeit häufig gestellte Aufgabe. Im Stand der Technik werden zum einen die Methode der Stereolithographie beschrieben, wobei diese den Nachteil hat, dass aufwändige Stützkonstruktionen während der Anfertigung des Prototypen aus einer Flüssigkeit (Harz) notwendig sind und die erhaltenen Prototypen relativ schlechte mechanische Eigenschaften aufweisen, die auf die begrenzte Anzahl an Einsatzstoffen zurückzuführen sind.

Das andere im Stand der Technik häufig genannte Verfahren, welches gut für den Zweck des Rapid Prototyping geeignet ist, ist das selektive Laser-Sintern (SLS), welches bereits eine große Verbreitung gefunden hat. Bei diesem Verfahren werden Kunststoffpulver oder mit Kunststoff ummantelte Metall-, Keramik-, oder Sandpartikel in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren relativ schnell wieder zu einer festen Masse. Durch wiederholtes Belichten von immer neu aufgebrachten Schichten können mit diesem Verfahren komplexe dreidimensionale Körper einfach und schnell hergestellt werden.

Das Verfahren des Laser-Sintems (Rapid Prototyping) zur Darstellung von Formkörpern aus pulverförmigen Polymeren wird ausführlich in der Patentschriften US 6,136,948 und WO 96/06881 (beide DTM Corporation) beschrieben. Die im Stand der Technik beschriebenen SLS-Verfahren haben den Nachteil, dass für dieses Verfahren eine kostspielige Lasertechnik notwendig ist. Sowohl der als Energiequelle fungierende Laser als auch die für die Aufbereitung und Lenkung des Laserstrahls notwendigen optischen Einrichtungen wie Linsen, Aufweiter und Umlenkspiegel sind extrem teuer und empfindlich.

Nachteilig bei dem bekannten Verfahren ist, dass nicht alle am Markt verfügbaren Laser eingesetzt werden können. Um Kunststoffpulver oder mit Kunststoff ummantelte Partikel versintern zu können, ist ein CO2-Laser erforderlich, der teuer in der Anschaffung und aufwendig bezüglich Pflege, Handhabung und Wartung ist. Kennzeichnend für den CO2-Laser ist die Wellenlänge von 10600 nm; das entspricht dem Ferninfrarotbereich. So muss ein aufwendiges Spiegelsystem verwendet werden, um den Laserstrahl über die Bauebene zu führen; ferner muss der Laser permanent gekühlt werden. Die Verwendung von Lichtwellenleitern ist nicht möglich. Es muss in der Regel eigens geschultes Personal für den Betrieb vorgehalten werden. Dadurch kommen solche Systeme für viele Endanwender nicht in Frage. Preiswertere Laser mit einer Wellenlänge im Mittel- oder Nahinfrarotbereich, im Bereich des sichtbaren Lichts, oder des Ultraviolettbereichs können aber nicht verwendet werden, da Kunststoffe in der Regel dadurch nicht bzw. nicht in einem für das Lasersintern erforderlichen Maß aufgeschmolzen werden können. Andere, deutlich preiswertere Energiequellen, die entweder nicht kohärent und/oder nicht monochromatisch und/oder nicht gerichtet strahlen, wie zum Beispiel Heizstrahler oder Lampen, sind aus den gleichen Gründen nicht zu verwenden. Zudem ist es schwer mit diesen Strahlern die Strahlung so in das Baufeld einzuleiten, dass nur genau definierte Bereiche aufschmelzen. Die Verwendung von Energiequellen, die keine Laser sind, hätte aber enorme Vorteile, was Kosten, Handhabbarkeit und Flexibilität angeht.

DE 199 18 981 A1 beschreibt die Herstellung von 3-dimensionalen Modellen aus Kunststoff mit Laserstrahlen einer Wellenlänge von 500 - 1500 nm wobei das Kunststoffpulver einen mittleren Teilchendurchmesser von 2 - 200 µm besitzt und einen IR-Absorber enthält.

Nach WO 2005/011959 A werden 3-dimensionale Objekte hergestellt indem Teilchenmaterial selektiv einer Strahlung ausgesetzt wird.

In WO 01/38061 ist zwar ein Verfahren beschrieben, dass mit preisgünstigen Energiequellen in Kombination mit sog. Inhibitoren arbeitet, die ein Versintern bzw. Aufschmelzen im Randbereich des Bauteils verhindern sollen. Dieses Verfahren ist jedoch mit entscheidenden Nachteilen behaftet, so ist das mit Inhibitor beaufschlagte Pulver nicht mehr recyclingfähig und Pulver ohne Inhibitor außerhalb des eigentlichen Bauteils wird ebenfalls aufgeschmolzen, so dass dieses Pulvermaterial ebenfalls nicht wiederverwendet werden kann. Bei Hinterschneidungen und Querschnittsänderungen ist ein großflächiger Auftrag von Inhibitor notwendig, welches mit einem deutlichen Performanceverlust bezüglich der Baugeschwindigkeit einhergeht.

Aufgabe der vorliegenden Erfindung war es deshalb, ein Verfahren zu entwickeln, welches eine preisgünstigere Lösung zur Herstellung von gesinterten Prototypen ohne die oben beschriebenen Nachteile ermöglicht.

Überraschenderweise wurde nun, wie in den Ansprüchen beschrieben, gefunden, dass Formteile durch ein Verfahren mit Quellen elektromagnetischer Energie, die keine Laser sind, und deren Strahlen daher nicht kohärent und/oder nicht monochromatisch und/oder nicht gerichtet sind, hergestellt werden können, wenn selektiv auf die aufzuschmelzenden Bereiche der jeweiligen Pulverschicht per Inkjet-Verfahren ein spezieller Absorber aufgetragen wird, der die durch den Eintrag elektromagnetischer Energie entstandene Wärme von dem Absorber an die zu versinternden Partikel weiterleitet. Besonders vorteilhaft ist es, dass die Energie flächig aufgebracht werden kann; dabei kann der Strahlfleck aber auch kleiner als die Baufläche sein, beispielsweise kann die Energiequelle linienförmig sein und der Energieeintrag über die gesamte Baufläche durch eine Relativbewegung der Energiequelle und der Bauplattform zueinander realisiert werden. Die Selektivität wird allein durch die Auftragung des Absorbers erreicht. Die damit erzielbare Genauigkeit und Schnelligkeit des Verfahrens sind damit gleich oder höher als beim konventionellen Lasersintern, bei dem ein Laser, meist ein CO2-Laser, verwendet wird. Das Verfahren ist deutlich kostengünstiger, flexibler und einfacher in der Handhabung. Die Kosten für den Betrieb einer geeigneten Lampe bzw. eines geeigneten Heizstrahlers liegen weit unter dem eines Lasers. Weiterhin besteht eine höhere Flexibilität, was die Auswahl der pulverförmigen Substrate angeht. Nicht zuletzt hat das Verfahren ein hohes Potential, was die Genauigkeit der damit hergestellten Formkörper angeht, da der Absorber mit der Genauigkeit des Inkjet-Verfahrens auf dem Substrat platziert werden kann. Es besteht außerdem die Möglichkeit, per InkJet-Verfahren dem Endprodukt weitere Eigenschaften mitzugeben bzw. beim Herstellprozess mitzudrucken, wie beispielsweise leitfähige Bereiche oder Farben.

Die verwendeten Energiequellen erzeugen elektromagnetische Strahlung, welche nicht kohärent und/oder nicht monochromatisch und/oder nicht gerichtet sind, im Bereich von 100 nm bis 1 mm. Das Licht sei ein Sonderfall der elektromagnetischen Strahlung, welches eine Wellenlänge im für das menschliche Auge sichtbaren Bereich, d. h. zwischen 380 und 780 nm, aussendet. Es handelt sich dabei ausdrücklich nicht um Laserstrahlen, welche meist kohärent und monochromatisch und gerichtet sind. Diese Merkmale können zwar auch von den im erfindungsgemäßen Verfahren verwendeten Energiequellen erfüllt werden, jedoch nicht alle aufgeführten zugleich. Die Strahlen können im Bereich des sichtbaren Lichts liegen, oder im Nah-, Mittel-, und Ferninfrarotbereich sowie im Ultraviolettbereich, bevorzugt im sichtbaren Bereich und im Nahinfratotbereich. Die Übertragung der Energie erfolgt über Konvektion und über Strahlung, wobei letzteres bevorzugt ist. Im einfachsten Fall handelt es sich um Heizstrahler oder Lampen. Das können, ohne die Erfindung darauf beschränken zu wollen, beispielsweise Glühlampen, Halogenlampen, Leuchtstofflampen, oder Hochdruckentladungslampen sein. Die Strahlungsquelle kann daher ein Glühdraht sein, beispielsweise mit einer oder zwei Wendeln, und die Ausführung kann eine Glühlampe oder eine Halogenglühlampe sein; das Spektrum der abgegebenen Strahlung reicht eher in den infraroten als in den ultravioletten Bereich. Die Lampenfüllung kann verschiedene Gase und Dämpfe, bei den Halogenglühlampen Halogene, aufweisen oder auch als Vakuum ausgebildet sein.

Eine weitere Ausführungsart ist die Verwendung von Gasentladungen als Strahlungsquelle, wobei eine Hochdruckentladung und eine Niederdruckentladung bekannte Wirkungsprinzipien sind. Die Gasentladungslampen sind mit einem Grundgas gefüllt; das können Metallgase oder Edelgase sein, beispielsweise Neon, Xenon, Argon, Krypton, und Quecksilber, auch dotiert mit beispielsweise Eisen oder Gallium, sowie Dämpfe mit Quecksilber, Metallhalogeniden, Natrium, Seltenerden. Je nach Ausführung heißen sie Quecksilberdampf-Hochdrucklampen, Halogen-Metalldampflampen, Natriumdampf-Hochdrucklampen, Xenon-Langbogenlampen, Natriumdampf-Niederdrucklampen, UV-Lampen, Leuchtstofflampen, oder Leuchtröhren. Ferner können Mischlichtlampen, bei denen eine Glühlampe mit einer Quecksilberdampf-Hochdrucklampe kombiniert wird, verwendet werden.

Die Strahlungsquelle kann auch als Festkörperentladung ausgeführt sein; dann handelt es sich um sogenannte Leuchtplatten (Elektroluminiszenzplatten). Auch Leuchtdioden, die nach dem Prinzip der Elektrolmniniszenz mit direkten Halbleiter Übergängen oder indirekten Übergängen mit isoelektronischen Rekombinationszentren funktionieren, seien genannt Um beispielsweise in Quecksilberdampf Niederdrucklampen die UV-Strahlung in sichtbares Licht umzuwandeln, werden sogenannte Leuchtstoffe verwendet. Diese sind sehr reine Kristalle, die mit genau definierten Verunreinigungen, versehen sind (Dotierung). Meist handelt es sich bei den anorganischen Kristallen um Phosphate, Silikate, Wolframate, Vanadate, die einzeln, aber auch in Kombination, Verwendung finden.

Falls ein Heizstrahler verwendet wird, strahlt er bevorzugt im Nah- oder Mittelinfrarotbereich, wobei der Nahinfrarotbereich (Infrarot A) eine Wellenlänge von 780 nm bis 1400 nm umfasst, und der Mittelinfrarotbereich (IR-B) eine Wellenlänge von 1400 nm bis 3000 nm. Auch der Ferninfrarotbereich (IR-C) mit einer Wellenlänge von 3000 nm bis 1 mm findet Verwendung, jedoch muss hier eine sorgfältige Abstimmung des Substrates und des Absorbers erfolgen, da bei der Verwendung von Kunstoffen als Substrat auch das Substrat bei IR-C selbst zum Versintern ausreichend Energie absorbieren kann. Das kann durch die geeignete Auswahl an Substrat, bzw. Einstellen des Unterschiedes in der Absorption zwischen mit Absorber belegten Bereichen und unbehandelten Bereichen, erreicht werden. Bevorzugt ist jedoch der Nah- und Mittelinfrarotbereich. Der Heizstrahler für den Infrarot-Bereich umfasst kurzwellige IR-Strahler, zum Beispiel Halogen-IR-Strahler, Quarzrohrstrahler, sowie Keramik- oder Metallrohr-Strahler.

Die Strahlungsquellen können ein breites Spektrum bezüglich der Wellenlängen abstrahlen, wobei der Schwerpunkt im sichtbaren Bereich, im Infrarotbereich, oder im Ultraviolettbereich liegen kann, oder aber Strahlen bei nahezu diskontinuierlichen einzelnen schmalen Wellenlängenbereichen angeben. Als Beispiel sei die Natriumdampf-Niederdrucklampe genannt, die fast ausschließlich Strahlung im Bereich von 560 bis 600 nm abgibt. Bevorzugt wird der Absorber und die verwendete Strahlungsquelle aufeinander abgestimmt. Die Leistung kann je nach Strahlungsquelle zwischen 10 und 10000 Watt liegen. Typische Farbtemperaturen liegen zwischen 800 und 10.000 K. Die Strahlungsquelle kann punktförmig, linienförmig, oder flächig sein. Es können auch mehrere Strahlungsquellen miteinander kombiniert werden. Zur besseren Ausnutzung der Energie können Reflektoren oder Refraktoren verwendet werden. Ferner können Blenden verwendet werden, um die Strahlung besser ausrichten zu können.

Je nach verwendetem Substrat kann es vorteilhaft sein, die UV-Strahlung mittels geeigneter Filter aus dem Spektrum der Lampe zu entfernen. Insbesondere Kunststoffe altern in diesem Bereich schnell, so dass der Bereich zwischen 100 und 400 nm speziell für diese Substrate nicht zur bevorzugten Ausführung des Verfahrens gehört.

Um das erfindungsgemäße Pulver oder Teile davon Schicht für Schicht aufschmelzen zu können, müssen die Verfahrensparameter entsprechend ausgewählt werden. Beispielsweise spielt die Schichtdicke, die Leistung und die Wellenlänge der Energiequelle und das verwendete Pulver, und besonders der Absorber sowie die Menge des aufgetragenen Absorbers pro Flächeneinheit, unter anderem eine Rolle, ebenso die Dauer der Einwirkung der elektromagnetischen Energie.

Es ist vorteilhaft, die Menge an Absorber den Bauteilgegebenheiten anzupassen; so kann beispielsweise in der Mitte einer Fläche weniger Absorber aufgetragen werden, besonders, wenn es schon einige darunter liegende aufgeschmolzenen Bereiche gibt. Ein weiterer Vorteil lässt sich erzielen, wenn die erste Schicht eines aufzuschmelzenden Bereiches anders mit Absorber belegt wird als die nachfolgenden.

Absorption ist definiert als eine Verminderung der Energie eines Strahls (Licht, Elektronen u. a.) beim Durchgang durch Materie. Die abgegebene Energie wird dabei in andere Energieformen, z. B. Wärme, umgewandelt. Dementsprechend ist ein Absorber ein Materiestück, bzw. Körper, der eine Strahlung absorbieren soll (aus www.wissen.de). In diesem Text soll als Absorber ein Additiv verstanden werden, welches Strahlung im Bereich zwischen 100 nm und 1 mm vollständig oder überwiegend absorbieren kann; dabei reicht es aus, wenn Teile des Absorbers diese Funktion erfüllen.

Gegenstand der vorliegenden Erfindung ist daher ein Verfahren zur Herstellung eines dreidimensionalen Objektes, gemäß dem Anspruch 1. Ein alternatives Verfahren umfaßt die Schritte:
a) Bereitstellen einer Schicht eines pulverförmigen Substrates
b) Temperieren des Bauraumes
c) Auftragen eines Absorbers in einer Suspension oder eines flüssigen Absorbers per Inkjet-Verfahren selektiv auf die zu versinternden Bereiche
d) ggf. Einstellung einer oder mehrerer funktionalisierter Schichten, z. B. leitfähige Eigenschaften, durch Auftragen entsprechender Substanzen
e) Selektives Aufschmelzen von Bereichen der Pulverschicht mittels Einbringung von elektromagnetischer Energie die entweder nicht gerichtet und/oder nicht monochromatisch und/oder nicht kohärent ist, mit einer Wellenlänge zwischen 100 nm und 1 mm, bevorzugt mittels Heizstrahler im IR-A und/oder IR-B-Bereich oder mit Lampen im sichtbaren oder IR-A und/oder IR-B-Bereich
f) Abkühlen der geschmolzenen und nicht aufgeschmolzenen Bereiche auf eine Temperatur, die eine zerstörungsfreie Entnahme der Formteile ermöglicht
g) Entnahme der Formteile

Die Schritte a) bis e) werden dabei solange wiederholt, bis das gewünschte Formteil Schicht für Schicht abgearbeitet worden ist. Schritt b) ist materialabhängig und damit optional. Schritt d) ist ebenfalls optional. Die Dicke der aufgetragenen Schicht liegt beispielsweise zwischen 0,05 und 2 mm, bevorzugt zwischen 0,08 und 0,2 mm.

Ein alternativer Ablauf ist, in der ersten Schicht den Schritt e) wegzulassen und ab der zweiten Schicht dann alternativ nach Schritt a) durchzuführen. Das führt zu einem Verschmelzen der Pulverpartikel genau in der Grenzschicht zwischen der obersten und der darunter liegenden Pulverschicht, was zu einer besonders guten Verbindung führt und außerdem das Verarbeitungsfenster vergrößert, da dadurch die Bildung von Curl (Aufrollen der Kanten oder Enden der aufgeschmolzenen Bereiche) weitgehend vermieden wird

Ein weiterer alternativer Ablauf ist es, den Schritt e) nicht in jeder Schleife durchzuführen, sondern nur in Intervallen oder im Extremfall sogar nur einmalig unmittelbar vor Schritt f) und g).

Überraschenderweise wurde gefunden, dass es relativ einfach möglich ist, mittels Eintrag entweder nicht gerichteter und/oder nicht monochromatischer und/oder nicht kohärenter elektromagnetischer Energie mit einer Wellenlänge zwischen 100 nm und 1 mm, dreidimensionale Objekte aus pulverförmigen Substraten herzustellen, in dem auf eine Schicht aus einem pulverförmigen Substrat, welches die Energie der oben genannten Wellenlängen nicht oder nur schlecht absorbiert, ein Absorber aufweisendes Material auf die zu verbindenden Bereiche der Schicht aufgetragen wird, der die Energie absorbieren kann und die absorbierte Energie in Form von Wärme an das ihn umgebende Substrat abgibt, wodurch das Substrat der Schicht bzw. gegebenenfalls einer darunter oder darüber liegenden Schicht in den genannten Bereichen durch Verschmelzen oder Versintern verbunden wird. Das Aufbringen des Absorbers und eventuellen weiteren Additiven kann mit einem Druckkopf mit einer oder mehreren Düsen, beispielsweise nach dem piezoelektrischen Effekt oder nach dem Bubble Jet-Prinzip arbeitend, ähnlich dem eines Tintenstrahldruckers, erfolgen. Die elektromagnetische Energie kann entweder punkt-, oder linienförmig oder aber flächig erfolgen, bevorzugt linienförmig oder flächig, was einen Schnelligkeitsvorteil des Verfahrens bedeutet.

Das erfindungsgemäße Verfahren hat den Vorteil, dass es einfacher, schneller, genauer und günstiger ist als herkömmliche Verfahren. Die gezielte Einwirkung von Energie an bestimmten Stellen der Schicht wird durch für elektromagnetische Strahlung mit der Wellenlänge zwischen 100 nm und 1 mm geeigneten Absorber erzielt, der auf den gewünschten Bereichen der Schicht aufgebracht wird.

Durch das erfindungsgemäße Verfahren ist ein schichtweiser automatisierter Aufbau eines dreidimensionalen Objektes durch Verwendung von entweder nicht gerichteten und/oder nicht monochromatischen und/oder nicht kohärenten Energiequellen mit einer Wellenlänge zwischen 100 nm und 1 mm in Kombination mit einem geeigneten Absorber, einfach möglich. Nicht mit Absorber behandeltes Pulver kann einfach wiederverwendet werden. Außerdem können direkt spezielle Eigenschaften wie elektrische Leitfähigkeit oder Farben "mitgedruckt" werden. Dem Teil können auf diese Weise selektiv ausgewählte Eigenschaften mitgegeben werden.

Das Funktionsprinzip des vorliegenden erfindungsgemäßen Verfahrens zur Herstellung von dreidimensionalen Objekten basiert prinzipiell auf den bei allen anderen Verfahren zum Rapid-Prototyping verwendetem Prinzip. Das dreidimensionale Objekt wird schichtartig aufgebaut Der Aufbau geschieht dadurch, dass Teile von Flüssigkeitsschichten (Stereolithographie) oder Pulverschichten (Lasersintern) miteinander bzw. mit Teilen von darunter liegenden Schichten verfestigt bzw. aufgeschmolzen werden, in dem diesen Teilen der Schichten Energie zugeführt wird. Die Teile der Schichten, denen keine Energie zugeführt wurde, liegen weiterhin als Flüssigkeit oder Pulver vor. Durch Wiederholen des Aufbringens und Aufschmelzens bzw. Verfestigens von Pulver bzw. Flüssigkeit wird schichtweise ein dreidimensionales Objekt erhalten. Nach Entfernen des nicht umgesetzten Pulvers bzw. der nicht umgesetzten Flüssigkeit wird ein dreidimensionales Objekt erhalten, dessen Auflösung (in bezug auf die Konturen) im Falle der Verwendung von Pulver unter anderem von der Schichtdicke und der Partikelgröße des verwendeten pulverförmigen Substrates abhängig ist.

Im Unterschied zu den bislang bekannten Verfahren wird die Energie nicht direkt den zu verbindenden Substraten zugeführt, sondern über einen Absorber, der die Energie absorbiert und in Form von Wärmeenergie an das ihn umgebende Substrat abgibt. Dadurch wird die Bandbreite der verwendbaren pulverförmigen Substrate gegenüber herkömmlichem Lasersintern deutlich vergrößert. Die Energie wird dem Absorber im erfindungsgemäßen Verfahren in Form von elektromagnetischer Strahlung, welche entweder nicht monochromatisch und/oder nicht kohärent und/oder nicht gerichtet ist, mit einer Wellenlänge zwischen 100 nm und 1 mm, bevorzugt durch Heizstrahler im IR-A und/oder IR-B-Bereich, oder durch Lampen im IR-A und/oder IR-B-Bereich oder im Bereich sichtbaren Lichtes, zugeführt, welche von dem Absorber absorbiert, in Wärmenergie umgewandelt und an die direkten pulverförmigen Nachbarn des Substrates, welche nicht oder in nicht ausreichendem Maße in der Lage sind, die Strahlung der obengenannten Strahler zu absorbieren, abgegeben wird. In nicht ausreichendem Maße bedeutet im vorliegenden Fall, dass durch Absorption von Strahlung durch eine Energiequelle mit der Wellenlänge zwischen 100 nm und 1 mm das pulverförmige Substrat nicht soweit erwärmt werden kann, dass es eine Verbindung durch Verschmelzen oder Versintern mit benachbarten Substratpartikeln eingehen kann bzw. die dazu benötigte Zeit sehr lang ist. Die von dem Absorber abgegebene Wärme ist allerdings ausreichend, um das dem Absorber benachbarte pulverförmige Substrat mit sich selbst und auch dem Absorber durch Verschmelzen oder Versintern zu verbinden. Auf diese Weise werden mit dem erfindungsgemäßen Verfahren dreidimensionale Objekte durch Verschmelzen oder Versintern eines pulverförmigen Substrats hergestellt.

Das Aufbringen der Absorber in Schritt c), der üblicherweise computergesteuert unter Verwendung von CAD-Anwendungen zur Berechnung der Querschnittsflächen erfolgt, hat zur Folge, dass nur behandelte pulverförmige Substrate in einem nachfolgenden Behandlungsschritt e) aufgeschmolzen werden. Das Absorber aufweisende Material wird deshalb nur auf selektierte Bereiche der Schicht aus a) aufgebracht, die zum Querschnitt des zu erstellenden dreidimensionalen Objektes gehören. Das Aufbringen selbst kann z. B. durch einen mit einer oder mehrerer Düsen ausgestatteten Druckkopf erfolgen. Nach dem abschließenden Behandlungsschritt e) der letzten Schicht wird mit dem erfindungsgemäßen Verfahren eine Matrix mit teilweise verbundenem Pulvermaterial erhalten, die nach Abkühlen und Entfernen des nicht verbundenen Pulvers das massive dreidimensionale Objekt freigibt.

Das erfindungsgemäße Verfahren wird im folgenden beispielhaft beschrieben, ohne dass die Erfindung darauf beschränkt sein soll.

Das erfindungsgemäße Verfahren zur Herstellung eines dreidimensionalen Objektes, zeichnet sich dadurch aus, dass es die Schritte des Anspruchs 1 umfaßt.

Ein alternatives Verfahren umfaßt die Schritte:
a) Bereitstellen einer Schicht eines pulverförmigen Substrates
b) Temperieren des Bauraumes
c) Auftragen eines Absorbers in einer Suspension oder eines flüssigen Absorbers per Inkjet-Verfahren selektiv auf die zu versinternden Bereiche
d) ggf. Einstellung einer oder mehrerer funktionalisierter Schichten, z. B. leitfähige Eigenschaften, durch Auftragen entsprechender Substanzen
e) Selektives Aufschmelzen von Bereichen der Pulverschicht mittels Einbringung von elektromagnetischer Energie die entweder nicht gerichtet und/oder nicht monochromatisch und/oder nicht kohärent ist, mit einer Wellenlänge zwischen 100 nm und 1 mm, bevorzugt mittels Heizstrahler im IR-A und/oder IR-B-Bereich oder mit Lampen im sichtbaren oder IR-A und/oder IR-B-Bereich
f) Abkühlen der geschmolzenen und nicht aufgeschmolzenen Bereiche auf eine Temperatur, die eine zerstörungsfreie Entnahme der Formteile ermöglicht
g) Entnahme der Formteile

Die Schritte a) bis e) werden dabei solange wiederholt, bis das gewünschte Formteil Schicht für Schicht abgearbeitet worden ist. Schritt b) ist materialabhängig und damit optional. Schritt d) ist ebenfalls optional. Die Dicke der aufgetragenen Schicht liegt beispielsweise zwischen 0,03 und 2 mm, bevorzugt zwischen 0,08 und 0,2 mm.

Ein alternativer Ablauf ist, in der ersten Schicht den Schritt e) wegzulassen und ab der zweiten Schicht dann alternativ nach Schritt a) durchzuführen. Das führt zu einem Aufschmelzen genau in der Grenzschicht zwischen der obersten und der darunter liegenden Pulverschicht, was zu einer besonders guten Verbindung führt und außerdem das Verarbeitungsfenster vergrößert, da dadurch die Bildung von Curl (Aufrollen der Kanten oder Enden der aufgeschmolzenen Bereiche) weitgehend vermieden wird.

Das Bereitstellen der pulverförmigen Schicht kann z. B. durch Aufbringen eines Pulvermaterials als Substrat auf eine Bodenplatte bzw. falls bereits vorhanden auf eine schon vorhandene, gemäß Schritt b) bis e) behandelte Schicht erfolgen. Das Aufbringen kann durch Aufrakeln, Aufrollen, Aufschütten und anschließendes Abziehen oder ähnliche Verfahren erfolgen. Einzige Vorraussetzung, die das Bereitstellen der Schicht erfüllen muss, ist die, dass die Schicht eine gleichmäßige Höhe aufweist. Bevorzugt weist die in Schritt a) bereitgestellte Schicht eine Höhe von kleiner 3 mm, vorzugsweise von 30 bis 2000 µm und besonders bevorzugt von 80 bis 200 µm auf. Die Höhe der Schichten bestimmt dabei die Auflösung und damit die Glätte der äußeren Struktur des hergestellten dreidimensionalen Objekts. Die Bodenplatte oder aber die Apparatur zur Bereitstellung der Schicht kann in der Höhe beweglich ausgeführt sein, so dass nach der Durchführung eines Schrittes d) oder e) entweder die erhaltene Schicht um die Höhe der als nächstes aufzubringenden Schicht abgesenkt oder die Apparatur um die Höhe der nächsten Schicht gegenüber der vorangegangenen Schicht angehoben werden kann.

Bevorzugt als pulverförmiges Substrat eingesetztes Pulvermaterial weist eine mittlere Korngröße (d₅₀) von 10 bis 150 µm, besonders bevorzugt von 20 bis 100 µm und ganz besonders bevorzugt von 40 bis 70 µm auf. Je nach Verwendungszweck kann es aber auch vorteilhaft sein, ein Pulvermaterial einzusetzen, welches besonders kleine Partikel, aber auch besonders große Partikel aufweist. Zum Erzielen von dreidimensionalen Gegenständen mit möglichst hoher Auflösung und möglichst glatter Oberfläche kann es vorteilhaft sein, wenn Partikel eingesetzt werden, die eine mittlere Partikelgröße von 10 bis 45 µm, vorzugsweise von 10 bis 35 µm und ganz besonders bevorzugt von 20 bis 30 µm aufweist.

Feines Material kleiner 20 µm, insbesondere kleiner 10 µm ist kaum verarbeitbar, da es nicht rieselt, und die Schüttdichte drastisch sinkt, wodurch mehr Hohlräume entstehen können. Zur leichteren Handhabung kann es vorteilhaft sein, wenn Partikel eingesetzt werden, die eine mittlere Partikelgröße von 60 bis 150 µm, vorzugsweise von 70 bis 120 µm und ganz besonders bevorzugt von 75 bis 100 µm aufweist

Als pulverförmiges Substrat wird vorzugsweise solches Pulvermaterial eingesetzt, welches durch Vermahlen, Verdüsung u. Kondensation in Inertgas, Verdüsung mit anschließender schlagartiger Erstarrung, Fällen und/oder anionische Polymerisation oder durch Kombinationen davon, hergestellt wird. Eine anschließende Fraktionierung und/oder Ausrüstung mit einer Rieselhilfe kann angeschlossen werden. Eine mechanische Nachbearbeitung, beispielsweise in einem schnelllaufenden Mischer, zur Verrundung der beim Mahlen entstandenen scharfkantigen Partikel und damit zur besseren Auftragbarkeit dünner Schichten kann ebenfalls sinnvoll sein.

Die Korngrößenverteilung kann bei den angegebenen mittleren Korngrößen der Pulvermaterialien beliebig gewählt werden. Vorzugsweise werden Pulvermaterialien eingesetzt, die eine breite oder enge Korngrößenverteilung, vorzugsweise eine enge Korngrößenverteilung aufweisen; auch bimodale Kornverteilungen sind vorteilhaft. Besonders bevorzugte Pulvermaterialien für die Verwendung in dem erfindungsgemäßen Verfahren weisen eine Korngrößenverteilung auf, bei der die Ungleichmäßigkeit, die definiert ist als Differenz des D90- und des D10-Wertes, bezogen auf den D50-Wert, zwischen 0,05 und 15, bevorzugt zwischen 0,1 und 10, und besonders bevorzugt zwischen 0,5 und 5. Die Kornverteilung wird beispielsweise mittels Laserbeugung mit dem Malvern Mastersizer S ermittelt. Die Korngrößenverteilung ist durch übliche Verfahren der Klassierung, wie z. B. Windsichten etc. einstellbar. Durch eine möglichst enge Korngrößenverteilung werden bei dem erfindungsgemäßen Verfahren dreidimensionale Objekte erhalten, die eine sehr gleichmäßige Oberfläche haben und, falls vorhanden, sehr gleichmäßige Poren aufweisen.

Zumindest ein Teil des eingesetzten pulverförmigen Substrates kann amorph, kristallin oder teilkristallin sein. Außerdem können aromatische Strukturen enthalten sein. Bevorzugtes Pulvermaterial weist eine lineare oder verzweigte Struktur auf. Besonders bevorzugtes Pulvermaterial, welches in dem erfindungsgemäßen Verfahren verwendet wird, weist zumindest zum Teil eine Schmelztemperatur von 50 bis 350 °C, vorzugsweise von 70 bis 200 °C auf

Als Substrate eignen sich in dem erfindungsgemäßen Verfahren Stoffe, die im Vergleich zu dem gewählten Absorber schlechter von elektromagnetischer Strahlung mit der Wellenlänge zwischen 100 nm und 1 mm erwärmt werden. Das eingesetzte pulverförmige Substrat sollte zudem eine ausreichende Fließfähigkeit im aufgeschmolzenen Zustand vorweisen. Als pulverförmige Substrate können insbesondere Polymere oder Copolymere, ausgewählt aus Polyester, Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, Polylactide, thermoplastische Elastomere, Polyoxyalkylene, Poly-(N-methylmethacrylimide) (PMMI), Polymethylmethacrylat (PMMA), Ionomer, Polyamid, Copolyester, Copolyamide, Silikonpolymere, Terpolymere, Acrylnitril-Butadien-Styrol-Copolymere (ABS), Polyethersulfon, Polyarylsulfon, Polyphenylensulfid, Polyaryletherketon, Polyphthalamid, Polyimid, Polytetrafluorethylen oder Gemische davon, eingesetzt werden.

Besonders bevorzugt wird im erfindungsgemäßen Verfahren ein Material als pulverförmiges Substrat eingesetzt, welches ein Polyamid, vorzugsweise zumindest ein Polyamid 6, Polyamid 11 und/oder Polyamid 12 oder ein Copolyester oder ein Copolyamid aufweist. Durch die Verwendung von Polyamiden lassen sich besonders formstabile dreidimensionale Formkörper herstellen. Besonders bevorzugt ist die Verwendung von Polyamid 12 Pulver, vorzugsweise hergestellt wie in DE 197 08 946 oder auch DE 44 21 454 beschrieben und besonders bevorzugt eine Schmelztemperatur und eine Schmelzenthalpie aufweisend wie in EP 0 911 142 angegeben. Sie können geregelt, teilgeregelt oder ungeregelt sein, bevorzugt ungeregelt. Sie können linear aliphatisch aufgebaut sein oder auch aromatische Bausteine aufweisen. Als bevorzugte Copolyamide oder Copolyester werden solche eingesetzt, wie sie unter dem Markennamen VESTAMELT^{®} bei der Degussa AG erhältlich sind. Besonders bevorzugte Copolyamide weisen eine Schmelztemperatur, bestimmt mittels Differential Scanning Calometrie (DSC) von 76 bis 159 °C, vorzugsweise von 98 bis 139 °C und ganz besonders bevorzugt von 110 bis 123 °C auf Die Copolyamide können z. B. durch Polymerisation von Gemischen von geeigneten Monomeren, z. B. ausgewählt aus Laurinlactam und/oder Caprolactam, als bifunktionelle Komponente, Korksäure, Azelainsäure, Dodecandisäure, Adipinsäure und/oder Sebacinsäure als Säurefunktion tragende Komponente und 1,6-Hexandiamin, Isophorondiamin und/oder Methyl-penta-methylen-diamin als Diamin hergestellt werden. Auch aromatische Bausteine sind können verwendet werden. Geeignete weitere Comonomere und Regeln zu ihrer Auswahl sind dem Fachmann bekannt und beispielsweise in J. G. Dolden, Polymer (1976,17), pp 875-892 beschrieben.

Um eine bessere Verarbeitbarkeit der pulverförmigen Substrate zu erreichen, kann es vorteilhaft sein, dass ein Pulvermaterial eingesetzt wird, welches Additive aufweist. Solche Additive können z. B. Rieselhilfen sein. Besonders bevorzugt weist das eingesetzte pulverförmige Substrat von 0,05 bis 5 Gew.-%, vorzugsweise von 0,1 bis 1 Gew.-% an Additiven auf. Rieselhilfen können z. B. pyrogene Kieselsäuren, Stearate oder andere literaturbekannte Rieselhilfen, wie z. B. Tricalciumphosphat, Calciumsilicate, Al₂O₃, MgO, MgCO₃ oder ZnO sein. Pyrogene Kieselsäure wird beispielsweise unter dem Markennamen Aerosil^{®} von der Degussa AG angeboten. Es kann zudem vorteilhaft sein, wenn das eingesetzte pulverförmige Substrat bereits Absorber aufweist, jedoch nicht in einer Menge, die zum ungewollten Aufschmelzen nicht selektierter Bereiche führt. Geeignete Grenzen kann der Fachmann leicht durch orientierende Versuche feststellen.

Neben oder an Stelle von solchen zum Teil anorganischen Rieselhilfen oder anderen Additiven kann ein erfindungsgemäß eingesetztes pulverförmiges Substrat auch anorganische Füllkörper aufweisen. Die Verwendung solcher Füllkörper hat den Vorteil, dass diese ihre Form durch die Behandlung beim Verbinden im Wesentlichen beibehalten und somit den Schrumpf des dreidimensionalen Objektes verringern. Zudem ist es durch die Verwendung von Füllkörpern z. B. möglich, die plastischen und physikalischen Eigenschaften der Objekte zu verändern. So können durch Verwendung von Pulvermaterial, welches Metallpulver aufweist, sowohl die Transparenz und Farbe als auch die magnetischen oder elektrischen Eigenschaften des Objektes eingestellt werden. Als Füllstoffe bzw. -körper kann das Pulvermaterial z. B. Glaspartikel, Keramikpartikel oder Metallpartikel aufweisen. Typische Füllstoffe sind z. B. Metallgriese, Aluminiumpulver, Stahl- oder Glaskugeln. Besonders bevorzugt werden Pulvermaterialien eingesetzt, die als Füllkörper Glaskugeln aufweisen. In einer bevorzugten Ausführungsvariante weist das erfindungsgemäße Pulvermaterial von 1 bis 70 Gew.-%, vorzugsweise von 5 bis 50 Gew.-% und ganz besonders bevorzugt von 10 bis 40 Gew.-% an Füllstoffen auf.

Neben oder an Stelle von anorganischen Rieselhilfen oder Füllstoffen kann ein erfindungsgemäß eingesetztes pulverförmiges Substrat auch anorganische oder organische Pigmente aufweisen. Diese Pigmente können neben Farbpigmenten, die die Farberscheinung des zu erstellenden dreidimensionalen Körpers bestimmen, auch Pigmente sein, die andere physikalische Eigenschaften der herzustellenden dreidimensionalen Gegenstände beeinflussen, wie z. B. Magnetpigmente oder Leitfähigkeitspigmente, wie z. B. leitfähig modifiziertes Titandioxid oder Zinnoxid, die den Magnetismus bzw. die Leitfähigkeit des Gegenstandes verändern. Besonders bevorzugt weist das einzusetzende Pulvermaterial aber anorganische oder organische Farbpigmente, ausgewählt aus Kreide, Ocker, Umbra, Grünerde, Terra di Siena gebrannt, Graphit, Titanweiß (Titandioxid), Bleiweiß, Zinkweiß, Lithopone, Antimonweiß, Ruß, Eisenoxidschwarz, Manganschwarz, Cobaltschwarz, Antimonschwarz, Bleichromat, Mennige, Zinkgelb, Zinkgrün, Cadmiumrot, Cobaltblau, Berliner Blau, Ultramarin, Manganviolett, Cadmiumgelb, Schweinfurter Grün, Molybdatorange, Molybdatrot, Chromorange, Chromrot, Eisenoxidrot, Chromoxidgrün, Strontiumgelb, Metalleffektpigmente, Perlglanzpigmente, Leuchtpigmente mit Fluoreszenz- und/oder Phosphoreszenzpigmenten, Umbra, Gummigutt, Knochenkohle, Kasseler Braun, Indigo, Chlorophyll, Azofarbstoffe, Indigoide, Dioxazinpigmente, Chinacridonpigmente, Phthalocyaninpigmente, Isoindolinonpigmente, Perylenpigmente, Perinonpigmente, Metallkomplexpigmente, Alkaliblaupigmente und Diketopyrrolopyrrol auf. Weitere Informationen zu einsetzbaren Pigmenten können z. B. Römpp Lexikon Chemie - Version 2.0, Stuttgart/New York: Georg Thieme Verlag 1999 sowie der dort angegebenen Literatur entnommen werden. Die Konzentration dieser Pigmente im Pulver muss aber so gewählt sein, dass sie allenfalls zu einer geringen Absorption der eingetragenen Energie führt; sie muss unterhalb der Schwelle liegen, bei der die Pulverpartikel durch die ihnen übertragenen Wärme versintern.

Als Pulvermaterial können auch Substanzen eingesetzt werden, die als Sonderform der oben genannten Füllkörper oder Pigmente betrachtet werden können. Bei dieser Art des Pulvermaterials weist das Pulver Körner aus einem ersten Material mit einer Größe, die kleiner als die oben genannten Dimensionen für das Pulvermaterial ist, auf. Die Körner sind beschichtet mit einer Schicht eines zweiten Materials, wobei die Dicke der Schicht so gewählt ist, dass das Pulvermaterial aus Kombination von Korn des ersten Materials und Beschichtung mit dem zweiten Material eine Größe wie oben angegeben aufweist Die Körner des ersten Materials weisen vorzugsweise eine Größe auf, die eine Abweichung von der Größe des Pulvenmaterials von weniger als 25 %, vorzugsweise weniger als 10 % und besonders bevorzugt weniger als 5 % aufweist. Das zweite Material, welches die Beschichtung der Körner darstellt, ist ein Material, welches im Vergleich zu dem gewählten Absorber schlechter von der elektromagnetischen Strahlung, die entweder nicht kohärent oder nicht gerichtet oder nicht monochromatisch ist, mit einer Wellenlänge zwischen 100 nm und 1 mm erwärmt wird. Das zweite Material sollte zudem eine ausreichende Fließfähigkeit im erwärmten Zustand vorweisen und sich durch Wärmeeinwirkung, wobei die Wärme vom Absorber bereitgestellt wird, versintern oder verschmelzen lassen. Als Beschichtungsmaterial können die pulverförmigen Substrate (die Pulvermaterialien) insbesondere die oben genannten Polymere oder Copolymere, vorzugsweise ausgewählt aus Polyester, Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, thermoplastische Elastomere, Polylactide, Polyoxyalkylene, Poly-(N-methylmethacrylimide) (PMMI), Polymethylmethacrylat (PMMA), Ionomer, Polyamid, Copolyester, Copolyamide, Silikonpolymere, Terpolymere, Acrylnitril-Butadien-Styrol-Copolymere (ABS), Polyethersulfon, Polyarylsulfon, Polyphenylensulfid, Polyaryletherketon, Polyphthalamid, Polyimid, Polytetrafluorethylen oder Gemischen davon, oder Phenolharze aufweisen. Das erste Material dieser Sonderform des Pulvermaterials kann Körner z.B. aus Sand, Keramik, Metall und/oder Legierungen umfassen. Besonders bevorzugtes Pulvermaterial dieser Art ist mit Phenolharz oder thermoplastischem Kunststoff beschichteter Sand, sogenannter Formsand.

Wenn der Absorber in der Lage ist, eine ausreichende Wärmemenge zu übertragen, ist es ebenso möglich, als Pulvermaterial Metallpulver, insbesondere Pulver von niedrigschmelzenden Metallen, wie z. B. Blei oder Zinn oder Legierungen, die z. B. Zinn oder Blei aufweisen, einzusetzen. Auch dieses Pulvermaterial weist vorzugsweise die oben genannten Dimensionen auf.

Mit dem erfindungsgemäßen Verfahren sind also dreidimensionale Objekte herstellbar, die mit einer oder mehreren funktionalisierten Schichten ausgerüstet werden können. Beispielsweise kann eine Funktionalisierung, wie z. B. die Ausrüstung mit leitfähigen Eigenschaften des ganzen Formteils oder aber auch nur bestimmter Bereiche durch Auftragen entsprechender Pigmente oder Substanzen analog zum Absorber oder durch Bereitstellen einer Schicht aus einer pulverförmigen Substanz, die diese Pigmente aufweist, erfolgen.

Das Aufbringen des Absorbers kann analog zu der in WO 01/38061 beschriebenen Aufbringung des Inhibitors erfolgen. Vorzugsweise erfolgt das Aufbringen des Absorbers mit einer in x,y-Ebene beweglichen Vorrichtung. Die Vorrichtung weist eine Möglichkeit auf, flüssige und/oder pulverförmige Absorber an definierten Stellen der gemäß Schritt a) bereitgestellten Schicht an diese abzugeben. Die Vorrichtung kann z. B. ein Druckkopf mit einer oder mehreren Düsen, wie er in einem Tintenstrahldrucker eingesetzt wird, sein. Die Ansteuerung der Vorrichtung zur Positionierung des Druckkopfes kann ebenfalls in gleicher Weise wie die Ansteuerung des Druckkopfes eines Tintenstrahldruckers erfolgen. Mit dieser Vorrichtung wird der Absorber an den Stellen der gemäß Schritt a) bereitgestellten Schicht aufgebracht, an denen das Substrat durch Versintern oder Verschmelzen verbunden werden soll.

Im erfindungsgemäßen Verfahren können alle Absorber eingesetzt werden, die durch elektromagnetische Strahlung mit einer Wellenlänge zwischen 100 nm und 1 mm erwärmt werden.

Im einfachsten Fall weist der Absorber ein sogenanntes Farbmittel auf Unter einem Farbmittel versteht man alle farbgebenden Stoffe nach DIN 55944, welche in anorganische und organische Farbmittel sowie in natürliche und synthetische Farbmittel einteilbar sind (s. Römpps Chemielexikon, 1981, 8. Auflage, S 1237). Nach DIN 55943 (Sept. 1984) und DIN 55945 (Aug. 1983) ist ein Pigment ein im Anwendungsmedium praktisch unlösliches, anorganisches oder organisches, buntes oder unbuntes Farbmittel. Farbstoffe sind in Lösemitteln und/oder Bindemitteln lösliche anorganische oder organische, bunte oder unbunte Farbmittel.

Der Absorber kann aber auch seine absorbierende Wirkung dadurch erhalten, dass er Zusatzstoffe aufweist. Das können beispielsweise Flammschutzmittel auf der Basis von Melamincyanurat sein (Melapur^{®} von der DSM), oder auf der Basis von Phosphor, bevorzugt Phosphate, Phosphite, Phosphonite, oder elementarer roter Phosphor. Ebenfalls als Zusatzstoff geeignet sind Kohlenstofffasern, bevorzugt gemahlen, Glaskugeln, auch hohl, oder Kaolin, Kreide, Wollastonit, oder Graphit.

Der im erfindungsgemäßen- Verfahren verwendete Absorber weist bevorzugt Ruß oder KHP, (Kupferhydroxidphoshat) oder Kreide, Knochenkohle, Kohlenstofffasern, Graphit, Flammschutzmittel oder Interferenzpigmente als Hauptkomponente auf. Interferenzpigmente sind sogenannte Perlglanzpigmente. Auf Basis von dem natürlichen Mineral Glimmer werden sie mit einer dünnen Schicht aus Metalloxiden, zum Beispiel Titandioxid und/oder Eisenoxid umhüllt und stehen mit einer mittleren Korngrößenverteilung zwischen 1 und 60 µm zur Verfügung. Interferenzpigmente werden beispielsweise von der Fa. Merck unter dem Namen Iriodin angeboten. Die Iriodinpalette von Merck umfasst Perlglanzpigmente und metalloxidbeschichtete Glimmerpigmente sowie die Unterklassen: Interferenzpigmente, Metallglanz-Effektpigmente (Eisenoxidbeschichtung des Glimmerkerns), Silberweiß-Effektpigmente, Goldglanzeffektpigmente(mit Titandioxid und Eisenoxid beschichteter Glimmerkern). Besonders bevorzugt ist die Verwendung von Iriodintypen der Iriodin-LS-Reihe, namentlich Iriodin LS 820, Iriodin LS 825, Iriodin LS 830, Iriodin LS 835 und Iriodin LS 850.

Ganz besonders bevorzugt ist die Verwendung von Iriodin^{®} LS 820 und Iriodin^{®} LS 825.

Daneben eignen sich ebenfalls: Glimmer bzw. Glimmerpigmente, Titandioxid, Kaolin, organische und anorganische Farbpigmente, Antimon(III)oxid, Metallpigmente, Pigmente auf der Basis von Bismutoxichlorid (z. B. Serie Biflair von Merck, Hochglanzpigment), Indiumzinnoxid (Nano ITO-Pulver, von Nanogate Technologies GmbH oder AdNano^{tm} ITO der Degussa), AdNano^{tm} Zinkoxid (Degussa), Lantanhexachlorid, Clearweld® (WO 0238677) sowie kommerziell erhältliche Flammschutzmittel, welche Melamincyanurat oder Phosphor, bevorzugt Phosphate, Phosphite, Phosphonite oder elementaren (roter) Phosphor, aufweisen.

Wenn eine Störung der Eigenfarbe des Formkörpers vermieden werden soll, weist der Absorber bevorzugt Interferenzpigmente, besonders bevorzugt aus der Iriodin LS-Reihe von Merck, oder Clearweld®, aus.

Die chemische Bezeichnung für das KHP, ist Kupferhydroxidphosphat; dieses wird als hellgrünes, feines kristallines Pulver mit einem mittleren Korndurchmesser von knapp 3 µm eingesetzt. Der Ruß kann nach dem Furnacerußverfahren, dem Gasrußverfahren oder dem FlammruLiverfahren hergestellt werden, vorzugsweise nach dem Furnaceraßverfahren. Die Primärteilchengröße liegt zwischen 10 und 100 nm, vorzugsweise zwischen 20 und 60 nm, die Kornverteilung kann eng oder breit sein. Die BET-Oberfläche nach DIN 53601 liegt zwischen 10 und 600 m²/g, bevorzugt zwischen 70 und 400 m²/g. Die Rußpartikel können zur Einstellung von Oberflächenfunktionalitäten oxidativ nachbehandelt sein. Sie können hydrophob (beispielsweise Printex 55 oder Flammruß 101 der Degussa) oder hydrophil (beispielsweise Farbruß FW20 oder Printex 150 T der Degussa) eingestellt sein. Sie können hochstrukturiert oder niederstrukturiert sein; damit wird ein Aggregationsgrad der Primärteilchen beschrieben. Durch die Verwendung spezieller Leitfähigkeitsruße kann die elektrische Leitfähigkeit der aus dem erfindungsgemäßen Pulver hergestellten Bauteile eingestellt werden. Durch die Verwendung von geperlten Rußen kann eine bessere Dispergierbarkeit sowohl bei den nassen als auch bei den trockenen Mischverfahren genutzt werden. Auch die Verwendung von Rußdispersionen kann von Vorteil sein.

Knochenkohle ist ein mineralisches Schwarzpigment, welches elementaren Kohlenstoff enthält. Sie besteht zu 70 bis 90 % aus Calciumphosphat und zu 30 bis 10 % aus Kohlenstoff. Die Dichte liegt typischerweise zwischen 2,3 und 2,8 g/ml.

Die Absorber können beispielsweise als Granulat, oder als Pulver oder als Flüssigkeit vorliegen. Da es für die Verteilung in einem Druckkopf mit einer oder mehreren feinen Düsen von Vorteil ist, wenn die Partikel möglichst fein sind, können zu grobe Partikel oder Granulate vermahlen oder nachgemahlen werden, bevorzugt bei tiefen Temperaturen, und evtl. anschließend klassiert werden.

Solche Additive, die hier als Absorber verwendet werden, sind beispielsweise bei der Firma Merck unter dem Namen Iriodin® erhältlich. Mit Ruß sind handelsübliche Standardruße gemeint, wie sie beispielsweise von den Firmen Degussa AG, Cabot Corp., oder Continental Carbon angeboten werden.

Kommerziell erhältliche Beispiele für geeignete Absorber im allgemeinen sind Iriodin® LS 820 oder Iriodin® LS 825 oder Iriodin® LS 850 der Firma Merck. Als Beispiel für den Ruß mag Printex 60, Printex A, Printex XE2, oder Printex Alpha der Firma Degussa dienen. Geeignetes KHP wird ebenfalls von der Firma Degussa unter dem Markennamen Vestodur^{®} FP-LAS angeboten.

Um in einem Druckkopf ähnlich wie eine Tinte auf das pulverförmige Substrat auftragbar zu sein, ist es von Vorteil, eine den Absorber enthaltende Flüssigkeit herzustellen. Es ist möglich, Mischungen von festen, flüssigen oder festen und flüssigen Absorber einzusetzen. Ebenfalls kann es vorteilhaft sein, als Feststoffe vorliegende Absorber in Flüssigkeiten zu suspendieren, die keine Absorber sind, um eine bessere Verteilung der als Feststoff vorliegenden Absorber über die gesamte Höhe der bereitgestellten Schicht zu erreichen. Auch der Zusatz von speziellen rheologischen Zusatzstoffen, die eine Sedimenation des festen Absorbers in der Flüssigkeit verhindern, ist von Vorteil. Ein weiterer Vorteil kann erzielt werden, wenn zur besseren Benetzung des Substrates der Absorber, insbesondere der flüssige Absorber oder die Suspension eines festen Absorbers in einer Flüssigkeit mit Tensiden wie beispielsweise Alkylphenolethoxilate, Fettalkoholethoxilate, Fettsäureethoxilate, Fettaminethoxilate, versehen wird. Die Flüssigkeit kann - ohne die Erfindung darauf einschränken zu wollen - Wasser, bevorzugt destilliert, oder Alkohole, beispielsweise Isopropanol, Glycerin, Diethylenglycol, enthalten.

Besonders vorteilhaft kann die Verwendung von kommerziell erhältlichen Dispersionen sein, beispielsweise aus der Serie Derussol der Degussa.

Ebenfalls vorteilhaft ist die Verwendung von flüssigem Absorber, beispielsweise Clearweld®.

In diesem erfindungsgemäßen Verfahren sind außerdem viele Absorber/Substrat Kombinationen denkbar, wobei für das Verfahren ein ausreichend großer Unterschied von Absorber und Substrat in der Fähigkeit durch die elektromagnetische Strahlung mit einer Wellenlänge zwischen 100 nm und 1 mm angeregt zu werden wichtig ist, damit am Ende des Verfahrens eine Matrix erhalten wird, die eine klare Grenze zwischen aufgeschmolzenen (also mit Absorber behandeltem) Substrat und nicht aufgeschmolzenen Substrat erreicht wird. Nur auf diese Weise ist sichergestellt, dass das erstellte dreidimensionale Objekt eine ausreichend glatte Kontur aufweist und von dem nicht verbundenen Substrat einfach gelöst werden kann. Die Genauigkeit des Verfahrens ist dem des Lasersinterns beispielsweise überlegen, da die Energie sehr viel gezielter eingebracht werden kann.

Um eine ausreichend große und lange Wärmeübertragung von Absorber auf das Substrat zu ermöglichen, sollte der Siedepunkt der Absorbers oder bei einem Gemisch von Absorbern zumindest eines Absorbers größer als der Schmelzpunkt des verwendeten Substrates sein. Die Dosierung der Absorber enthaltenden Flüssigkeit sowie die Eigenschaften der Pulvers und des Absorbers sowie der Flüssigkeit im Ganzen müssen aufeinander abgestimmt sein, damit der Absorber, insbesondere bei Einsatz eines flüssigen Absorbers, nicht durch die Schichten verläuft, sondern ausschließlich von den zu benetzenden Pulverbereichen aufgenommen wird. Die Abstimmung kann z. B. durch das Einstellen der Viskosität und die verwendete Menge der Absorber enthaltenden Flüssigkeit erfolgen. Dabei ist die Menge der verwendeten Flüssigkeit insbesondere von der Schichtdicke des Pulvers, von der Porosität des Pulvers und von der Teilchengröße und dem Anteil an flüssigem oder festen Absorber abhängig. Für die einzelnen Materialkombinationen kann die optimale Menge und Viskosität in einfachen Vorversuchen ermittelt werden. Zur Einstellung der Viskosität können bekannte Viskositätsvermittler, wie pyrogene Kieselsäuren, aber auch organische Mittel, verwendet werden. Außerdem ist es von Vorteil, wenn die den Absorber enthaltende Flüssigkeit Netzmittel und/oder Biozide und/oder Feuchthaltemittel aufweist. Die Flüssigkeit kann beispielsweise Wasser, vorzugsweise destilliert, oder Lösemittel oder Alkohole aufweisen. Der Absorber bzw. die Absorber enthaltende Flüssigkeit kann in der Schmelze bzw. im Formkörper verbleiben. Das kann im Fall von Verstärkung oder bei der Einstellung anderer Eigenschaften durch den Absorber (elektrische oder magnetische Leitfähigkeit) sogar von Vorteil sein. Die Trägerflüssigkeit, falls eine verwendet wurde, verbleibt entweder ebenfalls im Bauteil oder verdunstet oder verdampft. Vorteilhaft handelt sich bei den verwendeten Absorbern, Flüssigkeiten und sonstigen Zusatzstoffen um nicht toxische Stoffe, die eine problemlose Handhabung in Büroumgebung ermöglichen.

Die für die Erwärmung des Absorbers notwendige Energie wird in Form von elektromagnetischer Strahlung, welche entweder nicht monochromatisch und/oder nicht kohärent und/oder nicht gerichtet ist, im Bereich zwischen 100 nm und 1 mm, bevorzugt mittels Heizstrahler im IR-Bereich oder mit Lampen im IR-Bereich oder im Bereich sichtbaren Lichtes, zugeführt. Es kann vorteilhaft sein, die zu versinternden Schichten durch Zuführung von Wärme auf eine erhöhte Temperatur zu bringen oder auf einer erhöhten Temperatur zu halten, die unterhalb der Schmelz- oder Sintertemperatur des eingesetzten Polymers liegt. Auf diese Weise kann die zum selektiven Aufschmelzen benötigte elektromagnetische Energie verringert werden. Das setzt das Vorhandensein eines temperierten Baufeldes voraus, verringert jedoch die Wahrscheinlichkeit für das Auftreten des Curls (Aufrollen der Ecken und Kanten aus der Bauebene heraus, was ein erneutes Durchführen des Schrittes a) unmöglich machen kann). Ebenso kann es vorteilhaft sein, wenn der Absorber bzw. die den Absorber enthaltende Flüssigkeit vorgewärmt wird.

Die für das erfindungsgemäße Verfahren erforderliche Strahlung wird durch eine Energiequelle, die elektromagnetische Strahlung im Bereich zwischen 100 nm und 1 mm emittiert, erzeugt. Da es sich ausdrücklich nicht um Laserstrahlung handelt, zeigt die Strahlung zumindest eines dieser Merkmale nicht auf: kohärent, monochromatisch, gerichtet. Die Energiequelle kann punkt- oder linienförmig sein, oder aber flächig. Es können auch mehrere Energiequellen kombiniert werden, um in einem Schritt einen größeren Bereich bestrahlen zu können.

Bei dem vorliegenden Verfahren ist jedoch eine linienförmige oder sogar flächige Energieeinbringung durchaus von Vorteil, da die Selektivität der jeweiligen Schicht ja bereits über den selektiv per Inkjet-Verfahren aufgebrachten Absorber bzw. der Absorber enthaltenden Flüssigkeit erfolgt. Das Verfahren wird dadurch schneller.

Mittels des erfindungsgemäßen Verfahrens sind dreidimensionale Formkörper herstellbar. Diese schichtweise hergestellten dreidimensionalen Objekte liegen am Ende nach Abschluss des erfindungsgemäßen Verfahrens in einer Matrix, die aus mehreren Schichten gebildet wird, vor. Aus dieser Matrix, die aus verbundenem und nicht verbundenem pulverförmigen Substrat sowie Absorber besteht, kann das Objekt entnommen werden, während das nicht verbundene Substrat, gegebenenfalls nach einer Aufarbeitung z.B. durch Sieben, erneut eingesetzt werden kann. Die erfindungsgemäßen Formkörper können Füllkörper, ausgewählt aus Glaskugeln, Kieselsäuren oder Metallpartikeln aufweisen.

Das erfindungsgemäße Verfahren wird vorzugsweise in einer Vorrichtung zur schichtweisen Herstellung von dreidimensionalen Objekten durchgeführt, enthaltend
- eine bewegliche Vorrichtung zur schichtförmigen Auftragung eines pulverförmigen Substrates auf eine Arbeitsplattform oder auf eine gegebenenfalls schon auf der Arbeitsplattform vorhandene Schicht eines behandelten oder unbehandelten pulverförmige Substrates (2),
- eine in der x,y-Ebene bewegliche Vorrichtung (3) zur Auftragung eines Absorber aufweisenden Materials (4) und evtl. weiteren Additiven auf ausgewählte Bereiche der Schicht aus pulverförmigem Substrat und
- eine Energiequelle für elektromagnetische Strahlung, die entweder nicht kohärent und/oder nicht gerichtet und/oder nicht monochromatisch strahlt, mit der Wellenlänge zwischen 100 nm und 1 mm, bevorzugt Heizstrahler im IR-A und/oder IR-B-Bereich, oder Lampen im Bereich sichtbaren Lichts oder im IR-A und/oder IR-B-Bereich.

Alternativ können Bewegungen der Vorrichtungen bzw. der Energiequelle und der Arbeitsplattform relativ zueinander auch von einer beweglichen Arbeitsplattform übernommen werden. Es ist ebenfalls möglich, die Relativbewegungen in x-Richtung durch die Arbeitsplattform zu realisieren, und die Bewegungen in y-Richtung von der jeweiligen Vorrichtung, bzw. der Energiequelle, oder umgekehrt.

Die Vorrichtung ist vorzugsweise mit mehreren Vorratsbehältern ausgerüstet, aus denen das zu verarbeitende pulverförmige Substrat der Vorrichtung zur Erzeugung der Schichten zugeführt werden kann und der oder die eingesetzten Absorber der Vorrichtung zur Auftragung eines Absorbers auf ausgewählte Bereiche der Schicht aus pulverförmigem Substrat zugeführt werden kann. Durch Verwendung von Druckköpfen mit einer oder mehreren Düsen und dem Vorsehen eines Mischers kann erreicht werden, dass an bestimmten Zonen der Schicht, z. B. an besonders filigranen Bereichen oder z. B. am Rand des zu erstellenden Objektes eine andere Mischungen von Absorber als im Kernbereich des zu erstellenden Objektes eingesetzt werden. Auf diese Weise kann eine unterschiedliche Energiezufuhr an unterschiedlichen Positionen der Schicht erzeugt werden.

Ebenfalls Gegenstand der vorliegenden Erfindung ist das Pulvermaterial wie vorab beschrieben, welches zum Einsatz in dem erfindungsgemäßen Verfahren geeignet ist und welches sich insbesondere dadurch auszeichnet, dass es eine mittlere Korngröße von 10 bis 150 µm und zumindest ein Polymer oder Copolymer, ausgewählt aus Polyester, Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, thermoplastische Elastomere, Polylactide, Polyoxyalkylene, Poly-(N-methylmethacrylimide) (PMMI), Polymethylmethacrylat (PMMA), Ionomer, Polyamid, Copolyester, Copolyamide, Silikonpolymere, Terpolymere, Acrylnitril-Butadien-Styrol-Copolymere (ABS), Polyethersulfon, Polyarylsulfon, Polyphenylensulfid, Polyaryletherketon, Polyimid, Polytetrafluorethylen oder Gemische davon, auf.

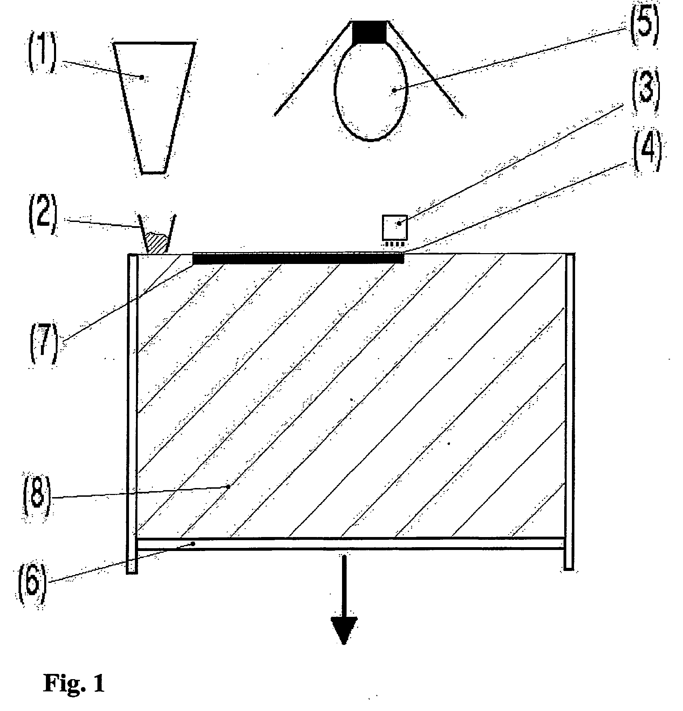

Das erfindungsgemäße Verfahren und die erfindungsgemäße Vorrichtung wird an Hand der Figur 1 näher erläutert, ohne dass die Erfindung auf diese Ausführungsform beschränkt sein soll.

Fig. 1 gibt schematisch die erfindungsgemäße Vorrichtung wieder. Auf einem beweglichen Boden (6), wird unbehandeltes pulverförmiges Substrat (2), welches in einem Vorratsbehälter (1) vorgelegt wird, zu einer Matrix (8) aufgebaut. Das Substrat wird mittels eines Rakels (2) zu dünnen Schichten auf dem beweglichen Boden bzw. zuvor aufgebrachten Schichten verteilt. Über eine in x,y-Ebene bewegliche Vorrichtung (3) wird der Absorber (4) bzw, die Absorber enthaltende Flüssigkeit auf ausgewählte Bereiche der Schicht aus pulverförmigem Substrat aufgebracht. Nach jeder Behandlung mit einem Absorber wird eine neue Schicht des pulverformigen Substrates aufgebracht. Mittels Energieeintrag in einer Wellenlänge zwischen 100 nm und 1 mm beispielsweise durch einen Heizstrahler oder eine Lampe (5), werden die Stellen des aufgebrachten Substrats, die mit dem Absorber behandelt wurden, zu einem dreidimensionalen Objekt, wie z. B. einem Plättchen (7) verbunden. Dieser Schritt kann auch vor dem Auftrag der nächsten Pulverschicht erfolgen.

Formkörper hergestellt nach dem beschrieben Verfahren können Anwendungen als Prototypen finden, aber auch in Nullserien Kleinserie oder Serienproduktion. Diese Formkörper können in den verschiedensten Anwendungen wie z.B. in der Luft- und Raumfahrt, Medizintechnik, in der Automobilindustrie, im Maschinenbau und in Unterhaltungsindustrie eingesetzt werden, ohne die Erfindung darauf einzuschränken.

Das erfindungsgemäße Verfahren wird an Hand der nachfolgenden Beispiele näher erläutert, ohne dass die Erfindung auf diese beschränkt sein soll.

### Beispiel 1: Herstellung eines Plättchens aus einem Copolyamid mittels Halogenlampe

Ein 10x10 cm oben offener Kasten wurde mit einem Boden versehen, der über eine Spindel verfahrbar ist. Der Boden wurde bis auf einen halben Zentimeter an die obere Kante bewegt; der verbliebene Raum wurde mit Pulver gefüllt und mit einer Metallplatte glattgestrichen. In der beschriebenen Vorrichtung wurde ein Modell eines Plättchens mit den Maßen 3*20*1 mm³ aus einem Copolyamid -Pulver (VESTAMELT^{®} 170, Degussa AG, Marl) hergestellt. Als Absorber wurde eine auf KHP (Vestodur^{®} FP-LAS von Degussa) basierende Suspension verwendet, die 35 Massen-% destilliertes Wasser, 25 Massen-% KHP und 40 Massen-% Isopropanol aufwies. Die Vorrichtung hatte eine Betriebstemperatur von ca 40 °C. Als Maske diente eine Metallplatte mit einer Aussparung von 3*20 mm, die über den Kasten gelegt wurde. Mit einem Pumpspray wurde die Suspension aufgesprüht. Dabei musste auf eine gleichmäßige Benetzung geachtet werden, sowie auf die Vermeidung von Tropfen. Danach wurde die Abdeckung entfernt. Pro Schicht wird die Halogenlampe mit 500 Watt Leistung mit einer Geschwindigkeit von 50 mm/sec einmal über das Pulverbett bewegt, und zwar im Abstand von 6 mm. Die Wellenlänge der Halogenlampe deckt einen großen Spektralbereich ab, mit Schwerpunkt in den Infrarot-Bereichen. Es handelt sich dabei um eine Osram Haloline Halogenlampe mit einer Länge von ca. 12 cm. Zur besseren Energieausbeute ist die Halogenlampe in eine Halterung eingesetzt, die mit einem Reflektor ausgestattet ist, der die Strahlung hauptsächlich in Richtung des Pulverbetts reflektiert. Nach einer Belichtung wurde die Plattform des Kastens um 0,3 mm abgesenkt und die vorherigen Vorgänge solange wiederholt, bis das Bauteil fertig war. Der D₅₀-Wert des Pulvers betrug 60 µm.

### Beispiel 2: Herstellung eines Plättchens aus Polyamid 12 mittels Glühlampe

Ähnlich der schon beschriebenen Vorrichtung wird ein weiteres Plättchen mit den Maßen 3*20*1 mm³ aus einem Polyamid 12-Pulver (EOSINT P PA 2200, EOS GmbH Electro Optical Systems, Krailling, Deutschland) hergestellt. In diesem Fall wird mit keiner Maske sondern mit einem Druckkopf gearbeitet, der ähnlich dem Inkjetverfahren die Flüssigkeit aufträgt. Als Absorber kommt Iriodin® LS 835 zum Einsatz. Die Flüssigkeit bestand zu 30 % aus Iriodin, 59 % Isopropanol und 1 % Pril (Henkel). Die Vorrichtung hat eine Betriebstemperatur von ca. 160 C. Die eingesetzte Osram Concentra Spot CONC R80 100W Reflektor Glühlampe hat einen Leistungspeak im nahen Infrarotbereich. Die Höhe, in der die Pulverschichten aufgetragen wurden, betrug 0,15 mm. Der Abstand zwischen Pulverbett und Lampe betrug 20 mm und die Einwirkzeit des Strahlers betrug pro Schicht ca. 30 Sekunden. Das verwendete Pulver wies einen d₅₀-Wert von 55 µm auf

### Beispiel 3: Herstellung eines Zylinders aus Copolyamid mittels Halogenstrahler

In der aus Beispiel 2 bekannten Vorrichtung wird ein Zylinder mit einem Durchmesser von 22 mm und einer Höhe von 4 mm aus einem Copolyamid (VESTAMELT^{®} X1310) hergestellt. Sicopal®green und Sicopal®blue dienen hier als Absorber. Mit dem Inkjetverfahren wurden die beiden Absorber aufgetragen, so dass jeweils die Hälfte des Querschnitts mit dem blauen und die andere Hälfte mit dem grünen Pigment benetzt waren. Durch diese Vorgehensweise konnte ein zweifarbiges Bauteil gefertigt werden. Die Flüssigkeiten bestand zu 25 Gewichtsprozent aus den BASF Pigmenten Sicopal®green bzw. Sicopal®blue, 50 % Isopropanol, 24 % destilliertem Wasser und 1 % Glycerin. Als Energiequelle wurde eine 35 W Halogenlampe Sylvania Superia 50 eingesetzt. Der Abstand zwischen Pulverbett und Lampe betrug 20 mm und die Einwirkzeit des Strahlers betrug pro Schicht ca. 20 Sekunden. Die Pulverschichthöhe betrug 0,2 mm. Der D₅₀-Wert des Pulvers betrug 55 µm.

### Beispiel 4: Herstellung eines Kegels aus Copolyamid mittels Xenon-Kurzbogenlampe

Der Durchmesser des herzustellenden Kegels betrug 25 mm und eine Höhe von 25 mm. Als Pulver diente VESTAMELT^{®} X1316. Mit dem Inkjetverfahren wurde die Flüssigkeit aufgetragen. Als Absorber wurde eine auf Ruß (PRINTEX alpha) basierende Suspension verwendet, die 40 Gewichtsprozent destilliertes Wasser, 30 % PRINTEX alpha und 30 % Isopropanol aufweist. Die Vorrichtung hat eine Betriebstemperatur von ca. 50 °C. Als Energiequelle wurde eine Osram XBO 700W/HS OFR Xenon-Kurzbogenlampe eingesetzt, die 20 mm über dem Pulverbett positioniert wurde. Die Einwirkzeit der Lampe pro Schicht betrug 10 Sekunden. Der D₅₀-Wert des Pulvers betrug 60 µm. Die Pulverschichthöhe betrug 0,15 mm.

## Patentansprüche

1. Verfahren zur Herstellung eines dreidimensionalen Objektes,
**dadurch gekennzeichnet,**
**dass** es die Schritte
a) Bereitstellen einer Schicht eines pulverförmigen Substrates (8)
b) Temperieren des Bauraumes
c) Auftragen eines Absorbers in einer Suspension oder eines flüssigen Absorbers per Inkjet-Verfahren selektiv auf die zu versinternden Bereiche (4)
d) Selektives Aufschmelzen von Bereichen der Pulverschicht mittels Einbringung von elektromagnetischer Energie, mit einer Wellenlänge zwischen 100 nm und 1 mm, mittels Heizstrahler im IR-A und/oder IR-B-Bereich oder mit Lampen im sichtbaren oder IR-A und/oder IR-B-Bereich (5)
e) Abkühlen der geschmolzenen und nicht aufgeschmolzenen Bereiche auf eine Temperatur, die eine zerstörungsfreie Entnahme der Formteile ermöglicht
f) Entnahme der Formteile
umfasst.

2. Verfahren nach Anspruch 1,
**dadurch gekennzeichnet,**
**dass** es die Schritte
a) Bereitstellen einer Schicht eines pulverförmigen Substrates (8)
b) Temperieren des Bauraumes
c) Auftragen eines Absorbers in einer Suspension oder eines flüssigen Absorbers per Inkjet-Verfahren selektiv auf die zu versinternden Bereiche (4)
d) Einstellung einer oder mehrerer funktionalisierter Schichten mit leitfähigen Eigenschaften oder Farben, durch Auftragen entsprechender Substanzen (8)
e) Selektives Aufschmelzen von Bereichen der Pulverschicht mittels Einbringung von elektromagnetischer Energie, mit einer Wellenlänge zwischen 100 nm und 1 mm, mittels Heizstrahler im IR-A und/oder IR-B-Bereich oder mit Lampen im sichtbaren oder IR-A und/oder IR-B-Bereich (5)
f) Abkühlen der geschmolzenen und nicht aufgeschmolzenen Bereiche auf eine Temperatur, die eine zerstörungsfreie Entnahme der Formteile ermöglicht
g) Entnahme der Formteile
umfasst.

3. Verfahren nach Anspruch 2,
**dadurch gekennzeichnet,**
**dass** zu Beginn einmal der Schritt e) durchgeführt wird, nachdem einmal Schritt a) bis d), anschließend Schritt b) und darauffolgend noch einmal Schritt a) durchgeführt worden ist und anschließend die weiteren Schritte in der Reihenfolge c), d), a), b) und e) durchgeführt werden.

4. Verfahren nach Anspruch einem der Ansprüche 1 bis 3,
**dadurch gekennzeichnet,**
**dass** das eingesetzte pulverförmige Substrat eine mittlere Korngröße von 10 bis 150 µm aufweist.

5. Verfahren nach zumindest einem der Ansprüche 1 bis 4,
**dadurch gekennzeichnet,**
**dass** ein Heizstrahler im Nah- oder Mittelinfrarotbereich eingesetzt wird.

6. Verfahren nach zumindest einem der Ansprüche 1 bis 4,
**dadurch gekennzeichnet,**
**dass** eine Lampe im IR-Bereich oder im Bereich sichtbaren Lichts eingesetzt wird.

7. Verfahren nach zumindest einem der Ansprüche 1 bis 4,
**dadurch gekennzeichnet,**
**dass** eine Glühlampe eingesetzt wird.

8. Verfahren nach zumindest einem der Ansprüche 1 bis 4,
**dadurch gekennzeichnet,**
**dass** eine Gasentladungslampe eingesetzt wird.

9. Verfahren nach zumindest einem der Ansprüche 1 bis 4,
**dadurch gekennzeichnet,**
**dass** die Energiequelle punktförmig, länglich oder flächig ihre Strahlung abgibt.

10. Verfahren nach zumindest einem der Ansprüche 1 bis 9,
**dadurch gekennzeichnet,**
**dass** der Absorber Farbmittel aufweist.

11. Verfahren nach Anspruch 10,
**dadurch gekennzeichnet,**
**dass** der Absorber Pigmente aufweist.

12. Verfahren nach Anspruch 10,
**dadurch gekennzeichnet,**
**dass** der Absorber Farbstoffe aufweist.

13. Verfahren nach zumindest einem der Ansprüche 1 bis 9,
**dadurch gekennzeichnet,**
**dass** der Absorber Ruß, KHP, Knochenkohle, Graphit, Kohlenstofffasern, Kreide oder Interferenzpigmente aufweist.

14. Verfahren nach zumindest einem der Ansprüche 1 bis 9,
**dadurch gekennzeichnet,**
**dass** der Absorber neben Ruß, KHP, Knochenkohle, Graphit, Kohlenstofffasern, Kreide oder Interferenzpigmenten weitere Komponenten aufweist.

15. Verfahren nach zumindest einem der Ansprüche 1 bis 9,
**dadurch gekennzeichnet,**
**dass** der Absorber Flammschutzmittel basierend auf Phosphor oder Melamincyanurat aufweist.

16. Verfahren nach zumindest einem der Ansprüche 10 bis 15,
**dadurch gekennzeichnet**,
der Absorber zusätzlich destilliertes Wasser, oder Alkohol oder Lösemittel aufweist.

17. Verfahren nach zumindest einem der Ansprüche 10 bis 15,
**dadurch gekennzeichnet**,
der Absorber zusätzlich ein Tensid und/oder Netzmittel und/oder Biozid und/oder Feuchthaltemittel enthält.

18. Verfahren nach einem der Ansprüche Anspruch 1 bis 17,
**dadurch gekennzeichnet,**
**dass** als pulverförmiges Substrat Polymere eingesetzt werden.

19. Verfahren nach einem der Ansprüche Anspruch 1 bis 17,
**dadurch gekennzeichnet,**
**dass** als pulverförmiges Substrat Sand, Metall-, oder Keramikpartikel, welche mit einem polymeren Material ummantelt sind, eingesetzt werden.

20. Verfahren nach Anspruch 18 oder 19,
**dadurch gekennzeichnet,**
**dass** das Polymer ein Polymer oder Copolymer, vorzugsweise ausgewählt aus Polyester, Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, thermoplastische Elastomere, Polylactide, Polyoxyalkylene, Poly-(N-methylmethacrylimide) (PMMI), Polymethylmethacrylat (PMMA), Ionomer, Polyamid, Copolyester, Copolyamide, Silikonpolymere, Terpolymere, Acrylnitril-Butadien-Styrol-Copolymere(ABS), Polyethersulfon, Polyarylsulfon, Polyphenylensulfid, Polyaryletherketon, Polyimid, Polytetrafluorethylen oder Gemische davon, eingesetzt werden.

21. Verfahren nach einem der Ansprüche 18 bis 20,
**dadurch gekennzeichnet,**
**dass** ein pulverförmiges Substrat eingesetzt wird, welches von 0,05 bis 5 Gew.-% einer Rieselhilfe aufweist.

22. Verfahren nach einem der Ansprüche 18 bis 21,
**dadurch gekennzeichnet,**
**dass** ein pulverförmiges Substrat eingesetzt wird, das anorganische Füllkörper aufweist.

23. Verfahren nach Anspruch 22,
**dadurch gekennzeichnet,**
**dass** als Füllkörper Glaskugeln eingesetzt werden.

24. Verfahren nach zumindest einem der Ansprüche 18 bis 23,
**dadurch gekennzeichnet,**
**dass** ein pulverförmiges Substrat eingesetzt wird, das anorganische oder organische Pigmente aufweist.

## Claims

1. Process for producing a three-dimensional object,
**characterized in that** it comprises
the steps of
a) providing a layer of a pulverulent substrate (8)
b) controlling the temperature of the manufacturing chamber
c) selective application of an absorber in a suspension or of a liquid absorber via an inkjet process to the regions (4) to be sintered
d) selective melting of regions of the powder layer by means of introduction of electromagnetic energy via a laser of wavelength from 100 nm to 1 mm, by means of radiative heaters in the IR-A and/or IR-B region, or using lamps in the visible or IR-A, and/or IR-B region (5)
e) cooling of the molten and non-molten regions to a temperature which allows the moldings to be removed intact
f) removal of the moldings.

2. Process according to Claim 1,
**characterized in that** it comprises
the steps of
a) providing a layer of a pulverulent substrate (8)
b) controlling the temperature of the manufacturing chamber
c) selective application of an absorber in a suspension or of a liquid absorber via an inkjet process to the regions (4) to be sintered
d) establishment of one or more functionalized layers with conductive properties or inks, via application of appropriate substances (8)
e) selective melting of regions of the powder layer by means of introduction of electromagnetic energy via a laser of wavelength from 100 nm to 1 mm, by means of radiative heaters in the IR-A and/or IR-B region, or using lamps in the visible or IR-A, and/or IR-B region (5)
f) cooling of the molten and non-molten regions to a temperature which allows the moldings to be removed intact
g) removal of the moldings.

3. Process according to Claim 2,
**characterized in that**
step e) is first carried out once, and then steps a) to d) are carried out once, and then step b) is carried out and step a) is carried out again once, and then the other steps are carried out in the sequence c), d), a), b), and e).

4. Process according to any of Claims 1 to 3,
**characterized in that**
the pulverulent substrate used has a median grain size of from 10 to 150 µm.

5. Process according to at least one of Claims 1 to 4,
**characterized in that** it
uses a radiative heater in the near or middle infrared region.

6. Process according to at least one of Claims 1 to 4,
**characterized in that** it
uses a lamp in the IR region or in the visible-light region.

7. Process according to at least one of Claims 1 to 4,
**characterized in that** it
uses an incandescent lamp.

8. Process according to at least one of Claims 1 to 4,
**characterized in that** it
uses a gas discharge lamp.

9. Process according to at least one of Claims 1 to 4,
**characterized in that**
the energy from the source is emitted in spot, linear, or spread form.

10. Process according to at least one of Claims 1 to 9,
**characterized in that**
the absorber comprises colorants.

11. Process according to Claim 10,
**characterized in that**
the absorber comprises pigments.

12. Process according to Claim 10,
**characterized in that**
the absorber comprises dyes.

13. Process according to at least one of Claims 1 to 9,
**characterized in that**
the absorber comprises carbon black, CHP, animal charcoal, graphite, carbon fibers, chalk, or interference pigments.

14. Process according to at least one of Claims 1 to 9,
**characterized in that**
the absorber comprises other components alongside carbon black, CHP, animal charcoal, graphite, carbon fibers, chalk, or interference pigments.

15. Process according to at least one of Claims 1 to 9,
**characterized in that**
the absorber comprises flame retardants based on phosphorus or melamine cyanurate.

16. Process according to at least one of Claims 10 to 15,
**characterized in that**
the absorber also comprises distilled water, or alcohol, or solvent.

17. Process according to at least one of Claims 10 to 15,
**characterized in that**
the absorber also comprises a surfactant and/or wetting agent and/or biocide and/or moisture retainer.

18. Process according to any one of Claims 1 to 17,
**characterized in that**
the pulverulent substrate used comprises polymers.

19. Process according to any one of Claims 1 to 17,
**characterized in that**
the pulverulent substrate used comprises sand, metal particles, or ceramic
particles, which have been encapsulated by a polymeric material.

20. Process according to Claim 18 or 19,
**characterized in that**
the polymer comprises a homo- or copolymer preferably selected from polyester, polyvinyl chloride, polyacetal, polypropylene, polyethylene, polystyrene, polycarbonate, polybutylene terephthalate, polyethylene terephthalate, polysulfone, polyarylene ether, polyurethane, thermoplastic elastomers, polylactides, polyoxyalkylenes, poly(N-methylmethacrylimides) (PMMI), polymethyl methacrylate (PMMA), ionomer, polyamide, copolyester, copolyamides, silicone polymers, terpolymers, acrylonitrile-butadiene-styrene copolymers (ABS), polyether sulfone, polyaryl sulfone, polyphenylene sulfide, polyaryl ether ketone, polyimide, polytetrafluoroethylene, or a mixture of these.

21. Process according to any of Claims 18 to 20,
**characterized in that**
use is made of a pulverulent substrate which comprises from 0.05 to 5% by weight of a powder-flow aid.

22. Process according to any of Claims 18 to 21,
**characterized in that**
use is made of a pulverulent substrate which comprises inorganic fillers.

23. Process according to Claim 22,
**characterized in that**
the filler used comprises glass beads.

24. Process according to at least one of Claims 18 to 23,
**characterized in that**
use is made of a pulverulent substrate which comprises inorganic or organic pigments.

## Revendications

1. Procédé pour la production d'un objet tridimensionnel, **caractérisé en ce qu'**il comprend les étapes
a) préparation d'une couche d'un substrat en forme de poudre (8)
b) thermostatisation de l'espace de construction
c) application d'un absorbant dans une suspension ou d'un absorbant liquide par un procédé à jet d'encre, sélectivement sur les zones à fritter (4)
d) fusion sélective de zones de la couche de poudre par introduction d'énergie électromagnétique à une longueur d'onde entre 100 nm et 1 mm, au moyen d'un émetteur de chaleur dans la plage des IR-A et/ou IR-B ou avec des lampes dans la plage visible ou des IR-A et/ou des IR-B (5)
e) refroidissement des zones fondues et non fondues à une température qui permet un prélèvement sans dégradation des pièces façonnées
f) prélèvement des pièces façonnées.

2. Procédé selon la revendication 1, **caractérisé en ce qu'**il comprend les étapes
a) préparation d'une couche d'un substrat en forme de poudre (8)
b) thermostatisation de l'espace de construction
c) application d'un absorbant dans une suspension ou d'un absorbant liquide par un procédé à jet d'encre, sélectivement sur les zones à fritter (4)
d) réglage d'une ou de plusieurs couches fonctionnalisées avec des propriétés conductrices ou des couleurs, par application de substances correspondantes (8)
e) fusion sélective de zones de la couche de poudre par introduction d'énergie électromagnétique à une longueur d'onde entre 100 nm et 1 mm, au moyen d'un émetteur de chaleur dans la plage des IR-A et/ou IR-B des avec des lampes dans la plage visible ou des IR-A et/ou des IR-B (5)
f) refroidissement des zones fondues et non fondues à une température qui permet un prélèvement sans dégradation des pièces façonnées
g) prélèvement des pièces façonnées.

3. Procédé selon la revendication 2, **caractérisé en ce qu'**on réalise au début une fois l'étape e), puis une fois les étapes a) à d), ensuite l'étape b) et ensuite encore une fois l'étape a), puis on réalise les autres étapes dans l'ordre c), d), a), b) et e).

4. Procédé selon l'une quelconque des revendications 1 à 3, **caractérisé en ce que** le substrat sous forme de poudre utilisé présente une granulométrie moyenne de 10 à 150 µm.

5. Procédé selon au moins l'une quelconque des revendications 1 à 4, **caractérisé en ce qu'**on utilise un émetteur de chaleur dans la plage des infrarouges proches ou moyens.

6. Procédé selon au moins l'une quelconque des revendications 1 à 4, **caractérisé en ce qu'**on utilise une lampe dans la plage des IR ou dans la plage de la lumière visible.

7. Procédé selon au moins l'une quelconque des revendications 1 à 4, **caractérisé en ce qu'**on utilise une ampoule à incandescence.

8. Procédé selon au moins l'une quelconque des revendications 1 à 4, **caractérisé en ce qu'**on utilise une lampe à décharge dans un gaz.

9. Procédé selon au moins l'une quelconque des revendications 1 à 4, **caractérisé en ce que** la source d'énergie émet son rayonnement en forme de pointe, longitudinalement ou à plat.

10. Procédé selon au moins l'une quelconque des revendications 1 à 9, **caractérisé en ce que** l'absorbant présente des agents de teinture.

11. Procédé selon la revendication 10, **caractérisé en ce que** l'absorbant présente des pigments.

12. Procédé selon la revendication 10, **caractérisé en ce que** l'absorbant présente des colorants.

13. Procédé selon au moins l'une quelconque des revendications 1 à 9, **caractérisé en ce que** l'absorbant présente de la suie, du KHP (hydroxyphosphate de cuivre), du noir animal, du graphite, des fibres de carbone, de la craie ou des pigments à interférence.

14. Procédé selon au moins l'une quelconque des revendications 1 à 9, **caractérisé en ce que** l'absorbant présente, outre de la suie, le KHP (hydroxyphosphate de cuivre), le noir animal, le graphite, les fibres de carbone, la craie ou les pigments à interférence, d'autres composants.

15. Procédé selon au moins l'une quelconque des revendications 1 à 9, **caractérisé en ce que** l'absorbant présente des agents retardateurs de flammes à base de phosphore ou de mélamine-cyanurate.

16. Procédé selon au moins l'une quelconque des revendications 10 à 15, **caractérisé en ce que** l'absorbant présente en outre de l'eau distillée, de l'alcool ou des solvants.

17. Procédé selon au moins l'une quelconque des revendications 10 à 15, **caractérisé en ce que** l'absorbant contient en outre un agent tensioactif et/ou un agent mouillant et/ou un biocide et/ou un humectant.

18. Procédé selon l'une quelconque des revendications 1 à 17, **caractérisé en ce qu'**on utilise des polymères comme substrat sous forme de poudre.

19. Procédé selon l'une quelconque des revendications 1 à 17, **caractérisé en ce qu'**on utilise comme substrat sous forme de poudre du sable, des particules métalliques ou céramiques qui sont enrobés d'un matériau polymère.

20. Procédé selon la revendication 18 ou 19,
**caractérisé en ce que** le polymère est un polymère ou un copolymère, de préférence choisi parmi un polyester, un poly(chlorure de vinyle), un polyacétal, un polypropylène, un polyéthylène, un polystyrène, un polycarbonate, un poly(téréphtalate de butylène), un poly(téréphtalate d'éthylène), une polysulfone, un polyarylénéther, un polyuréthane, les élastomères thermoplastiques, les polylactides, les polyoxyalkylènes, les poly-(N-méthylméthacrylimides) (PMMI), un poly(méthacrylate de méthyle) (PMMA), un ionomère, un polyamide, un copolyester, les copolyamides, les polymères de silicone, les terpolymères, les copolymères d'acrylonitrile-butadiène-styrène (ABS), une polyéthersulfone, une polyarylsulfone, un poly(sulfure de phénylène), une polyaryléthercétone, un polyimide, un polytétrafluoroéthylène ou leurs mélanges.

21. Procédé selon l'une quelconque des revendications 18 à 20, **caractérisé en ce qu'**on utilise un substrat sous forme de poudre, qui présente 0,05 à 5% en poids d'un adjuvant d'écoulement.

22. Procédé selon l'une quelconque des revendications 18 à 21, **caractérisé en ce qu'**on utilise un substrat sous forme de poudre, qui présente des corps de remplissage inorganiques.

23. Procédé selon la revendication 22, **caractérisé en ce qu'**on utilise des billes de verre comme corps de remplissage.

24. Procédé selon au moins l'une quelconque des revendications 18 à 23, **caractérisé en ce qu'**on utilise un substrat sous forme de poudre, qui présente des pigments inorganiques ou organiques.
